# EUROPEAN PATENT APPLICATION

(11) **EP 3 418 060 A1**
(43) Date of publication of application: **26.12.2018**
(21) Application number: 18179040.3
(22) Date of filing: 21.06.2018
(51) Int. Cl.: B41J 3/407, G06F 3/12

(54) **METHOD FOR DURABLE PRINTING OF A TAB STICKER SHEET**

(30) Priority: 22.06.2017 NL 2019111
(71) Applicant: Lindauer, T.H., 2953 XR Alblasserdam (NL)
(72) Inventor: Lindauer, T.H., 2953 XR Alblasserdam (NL)
(74) Representative: van Dokkum, Willem Gerard Theodoor

(57) **Abstract**

Method for the sustainable printing of a tab sticker sheet 1, wherein the tab sticker sheet is provided with one or more free tab stickers 2, 2', which are suitable for being printed by a printer with the aid of a print template 11 corresponding to the tab sticker sheet to be printed, wherein the entered tab text 17, 18, 19 is sent from the print template 11 to the printer, after which by selecting the tab sticker 12", 13", 14" on the print template 11, the entered tab text 17, 18, 19 on the print template 11 is erased and this tab sticker 12", 13", 14" on the print template 11, corresponding to the tab sticker sheet 1, is designated as consumed or non-free 15.

## Description

The invention relates to a method for durable printing of a tab sticker sheet, wherein the tab sticker sheet is provided with one or more free tab stickers, which are suitable for printing by a printer, wherein the printer is controlled by a control station with display means and input means, and wherein a print template corresponding to and assigned to the tab sticker sheet to be printed is loaded into the control station and a representation of the print template is displayed on the display means.

Index tabs (or short tabs) are used for quickly retrieving and quickly selecting file folders or pages, paragraphs and chapters in large documents or books. Usually, these index tabs are applied to the edges of the folders or to the edges of the pages or other sheet-like material of a document or of a book. Preferably, therefore the index tabs are provided with a short text or code, with which the user can quickly find the desired part of the document. To facilitate the fast retrieval and fast selection of folders and pages, the index tabs are arranged having an offset with respect to each other. Preferably, the index tabs are arranged in such a way that the text on each index tab can be easily read and selected and that the desired page can be opened quickly by engaging the index tab.
A common form of an index tab is formed from a sticker, which is placed on a tab sticker sheet. Preferably, the tab sticker sheets are suitable for use in printers, so that each tab can be provided with a printed individual text. Preferably, the tab sticker consists of two parts, which parts must be applied to both sides of a page. This provides for easily usable tab stickers having easily visible text on both sides of the pages. The index tab is placed on the edge of, for example, a page of a book, by pressing the adhesive part of the first part of the tab sticker against the page. The second part of the tab sticker is then folded over the crease or fold line of the tab sticker and applied (with the adhesive part) onto the other side of the page, opposite to the first part of the tab sticker.

The use of tab sticker sheets and the printing thereof in a printer have a number of disadvantages. Usually it is not known at once what the texts should be on the tab stickers and on which pages or folders the tab stickers should be affixed. As a result, it often happens that tab sticker sheets are only partly printed and that the remaining tab stickers will not be printed and applied. Usually, the printing software for stickers can only be set once and does not take into account the previously used and still free tab stickers on a tab sticker sheet. This causes a wasteful and unsustainable consumption of tab stickers and tab sticker sheets. An additional disadvantage of the use of tab stickers is that they cannot simply be placed on the pages in a staggered fashion. If the tab stickers are placed too close together, the text on the individual index tabs is not easy to read, making it difficult to retrieve and select the page searched for. If the tab stickers are placed too far apart, fewer index tabs can be fitted below each other and a second row of index tabs must be started too early, which second row of index tabs is less visible and less easy to select under the first row of index tabs, which normally extends from the top of the page to the bottom of the page.

US 2002/0122206 discloses a method for printing sticker sheets with the aid of a printer, which for this purpose is provided with an optical sensor. The optical sensor scans the sticker sheet and determines which stickers are still available for printing and which stickers have already been printed. In order to better determine which stickers have already been printed, a marker is placed and printed near the stickers, which indicates that this sticker is no longer available.
This method has a number of disadvantages. The method requires the use of special hardware, namely a printer with an optical sensor and a computer device on the printer for processing the data from the optical sensor. If there is no large optical distinction between the carrier and the sticker, the optical sensor will have difficulty determining the used, absent stickers on the sticker sheet. The use of printed markers on the sticker sheet has the disadvantage that the stickers cannot be placed close to each other because there must be space between the stickers for applying the markers.

US 2002/0122206 in [0003] mentions the use of known printing software such as Avery Label Pro and 3M Post-It software for printing sticker sheets. This software has the disadvantage that it must be purchased, installed and maintained by the user. Additionally, the parameters and other information of the sticker sheets must be entered by the user himself or purchased and entered via a (closed) proprietary file format.

Therefore, there is a need for a method for printing stickers, which method has a low threshold and is easy accessible, which method is user-friendly and inexpensive, therefore makes use of (free) standard software and open format files, for which no special hardware such as an optical sensor has to be purchased and where applying (by printing) of markers near the used and removed stickers is not necessary.

Furthermore, there is a need for a method for sustainable printing of a tab sticker sheet, wherein all tab stickers on the tab sticker sheet can be used in multiple printing cycles or passes, wherein the tab stickers can be easily printed with a print template and comprises an easy tracking system for administrating which tab stickers have been used and which are still free; and wherein, moreover, the tab stickers can be accurately staggered applied one below the other at a clearly readable, predetermined distance.

The object of the present invention is therefore to provide an inexpensive and user-friendly method, wherein the tab sticker sheet is sustainably consumed and wherein all tab stickers can be printed and used on a tab sticker sheet, even with several different printing passes, and wherein the tab stickers can be applied more quickly and easily in a well-readable staggered row on different pages, without requiring purchasing expensive hardware or software.

The invention provides a method as mentioned in the preamble, which further comprises the steps:
selecting a free tab sticker on the print template of the control station using the input means, entering a tab text on a selected free tab sticker of the print template, feeding the entered tab text including position information from the print template to the printer,
such that the tab sticker on the tab sticker sheet is provided with the entered text by means of printing, which tab sticker on the tab sticker sheet corresponds to the selected free tab sticker on the print template,
selecting again the tab sticker on the print template by means of the input means, thereby erasing the entered tab text on the print template, and designating this tab sticker on the print template, corresponding to the tab sticker sheet, as used or non-free.

By using a print template, which corresponds to the tab sticker sheet to be printed, and which is connected to the printer at the control station, it is easy to keep track of the tab stickers on the tab sticker sheet which are still free and which tab stickers have already been used, due to the possibility offered of re-selecting the tab sticker on the print template, whereby the text on the tab sticker is erased and at the same time the tab sticker is designated as printed, used or non-free.

In particular, the print template is an editable document file with a fixed layout in an open format, which preferably can be read, presented and processed by a standard plug-in and/or a standard read-view-edit software program.

This results in a user-friendly and inexpensive method, in which the user is not obliged to purchase expensive special software and to install it at the control station, or to buy special hardware.

Preferably, the control station comprises storage means, and the method further comprises the step, after the step of selecting again the tab sticker: storing the print template comprising at least one used tab sticker onto the storage means, the print template corresponding to and assigned to the printed tab sticker sheet.
These measures have the advantage that by means of the input means it is easy to keep track in the print template at the control station which tab stickers on the tab sticker sheet have already been used and printed.

In a preferred embodiment according to the invention, the method further comprises the steps, before the step of selecting a free tab sticker on the print template: inserting into the printer a tab sticker sheet with at least one free tab sticker;
loading into the control station from the storage means of the print template with at least one free tab sticker, corresponding to and assigned to the tab sticker sheet to be printed in the printer.
By assigning a print template to a tab sticker sheet and (re)loading the tab sticker sheet in the printer and (re)loading the corresponding print template from the storage devices into the control station, it is ensured that each time free tab stickers are printed and that all the tab stickers of the entire tab sticker sheet are printed and can be used.

Preferably, the step of loading from the storage means into the control station of the print template with at least one free tab sticker is replaced by: loading a new print template without used stickers, when a new tab sticker sheet without any used tab stickers is inserted into the printer.
When a new tab sticker sheet is inserted into the printer, also a new print template must be loaded into the control station so that the number of free, printable tab stickers on the print template again corresponds to the number of printable tab stickers on the tab sticker sheet.

The invention also relates to a tab sticker, which has been printed with the method according to the invention.

Preferably, two or more tab stickers are applied as index tabs to one or more sheets of paper or of other materials, including pieces of cardboard and plastic, and wherein an affixing applicator is used to apply the index tabs at a predetermined distance and number to the sheets of paper.
By using the affixing applicator, the tab stickers can be applied as efficiently as possible and as sustainably as possible onto the sheets of paper or pages by placing the affixing applicator next to the pages and applying the index tabs onto the pages according to the example on the affixing applicator.

Hereafter, the invention will be further discussed by means of some embodiments, with reference to some figures.
- Figure 1: shows an embodiment of a tab sticker sheet with thirty tab stickers;
- Figure 2: shows an embodiment of a print template for the tab sticker sheet of figure 1;
- Figure 3: shows the print template of figure 2 with six non-free used tab stickers;
- Figure 4: shows an affixing applicator for a row containing ten index tabs.

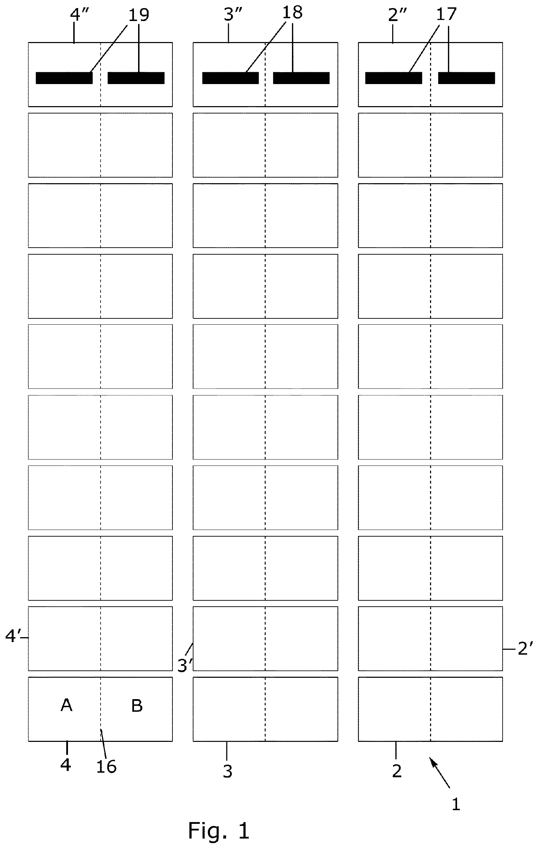

Figure 1 shows a tab sticker sheet 1, which is provided with thirty tab stickers 2, 2', 2", 3, 3', 3", 4, 4', 4", etc. in three columns containing ten tab stickers. The tab sticker sheet 1 is suitable for printing in a printer, including a laser printer and an ink jet printer. Accordingly, the print surface of the tab sticker sheet is suitable for being printed in a printer. Furthermore, the tab sticker sheet is provided with adhesive layers and with a non-adhesive base layer, on which the tab sticker is adhered during printing and, from which the tab sticker, after printing, can easily be pulled away. The tab sticker in this example is a double-folded tab sticker that forms a double-sided index tab on a sheet of paper or page. For this purpose, the tab sticker comprises a folding line 16 over which the two parts A, B of the tab sticker can be folded together, so that the printed tab text is readable on both sides of the index tab. Therefore, the tab text 17, 18, 19 is preferably applied onto both parts A, B of the tab sticker 2", 3", 4".

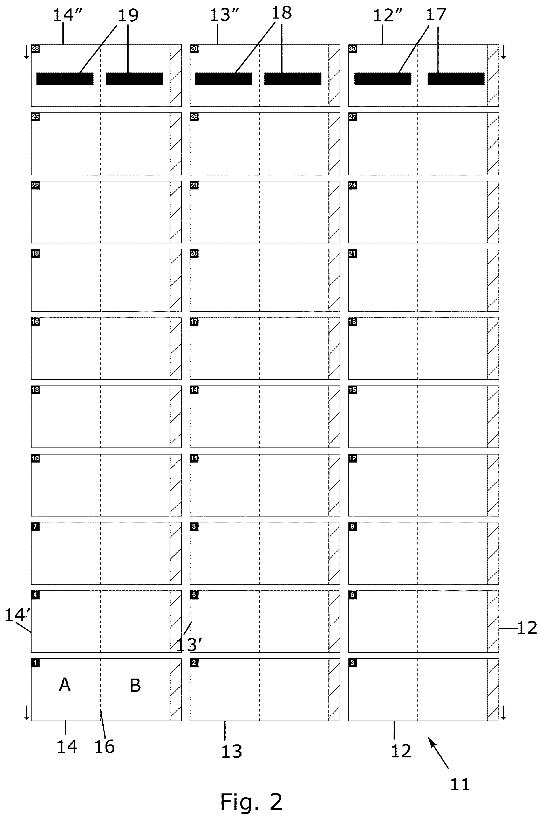

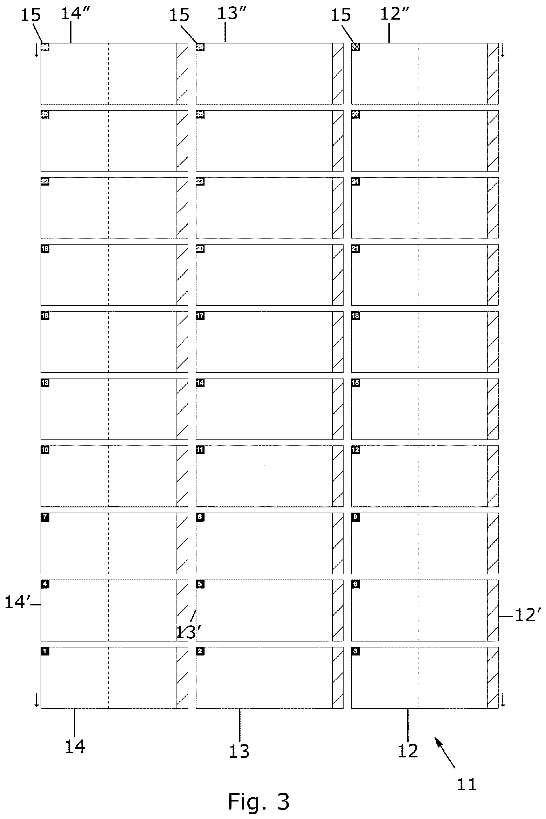

Figure 2 shows the print template 11, which corresponds to, and is assigned to, and belongs to the tab sticker sheet 1 of Figure 1. The print template 11 is loaded into a control station with display means and input means such as a digital computer with monitor and keyboard and mouse. The control station is connected to a printer in which tab sticker sheets can be inserted and printed. The print template 11 is shown to a user on the display means, so that this print template can be configured at the control station by the user with the aid of the input means, and the input box can be provided with a tab text 17, 18, 19. The entered tab text is then printed from the print template onto the tab sticker sheet, by providing the printer with the precise position information of the selected tab sticker together with the entered tab text, so that the tab sticker on the tab sticker sheet, which corresponds to the tab sticker on the print template, is printed. After printing the selected tab stickers 2", 3", 4" of the tab sticker sheet 1, the tab stickers 12", 13", 14" on the print template 11 are re-selected by the user with the input means. As a result, the entered tab text 17, 18, 19 on the print template 11 is erased and the used tab stickers 12", 13", 14" on the print-template are designated (marked) as used or not-free (see Figure 3), for example by providing a cross in the sequence number and/or on the input box for the tab text. Other solutions for marking the tab sticker as used on the print template can also be applied, such as providing a marking text or by removing or rendering the input box unusable for entering the tab text on the print template.

Figure 3 shows the print template 11 of Figure 2 after printing the upper row of tab stickers 12", 13", 14" and after re-selecting these tab tickers 12", 13", 14" following the printing step of the printer and removing and using the tab stickers 2", 3", 4" from the tab sticker sheet 1. In the exemplary embodiment of Figure 3, a cross 15 is shown through the sequence numbers 28, 29, 30 of the used tab stickers 12", 13", 14". When at that moment no further printed tab stickers are required and the printer must be used for other printing tasks, the tab sticker sheet 1 is not reintroduced into the printer (tray) and the execution of the print template is terminated on the control station. The print template 11 is now stored on storage means of the control station in the form obtained after erasing or deactivating the used tab stickers 12", 13", 14". These storage means may comprise a storage disk such as an internal hard disk but may also include a piece of permanent (flash) memory such as a removable SD card or an internal SSD or ROM memory on a computer board in the control station or a parallel network system including Cloud computing. For a sustainable use of the tab sticker sheet, it is essential to be able to store the status of that sheet including the configuration of the used and unused tab stickers together with the print template. This tab configuration data can be stored within the print template, for example as a program file in an open format such as XML, PDF format, or can be saved as a separately linked (data) file. Preferably, the print template is an editable document file with a fixed layout, which can be read, presented and processed by a standard plug-in and/or standard read-view-edit software program on the control station. This requires well-known (free) browser software for the user, such as FireFox, Chrome or Edge or reader software such as the Acrobat Reader. This has the advantage that no expensive or complicated software has to be purchased and installed by the user at the user's control station. As a result, the use of the tab sticker sheets has a low threshold and the costs of the tab sticker sheets remain low.

When again tab stickers must be printed on a previously used tab sticker sheet 1, firstly, the assigned, and corresponding, print template 11 is loaded into the control station from the location where it is stored or was stored after the last printing pass or task. Because the configuration of the free tab stickers on the tab sticker sheet is stored and indicated in the print template 11, a free unused tab sticker can be selected by the user, and be provided with a tab text and printed.

When the tab sticker sheet is completely used up and there are no more free tab stickers available to be printed, the associated and assigned print template must be deleted from the working memory of the control station or from the storage means. When a new tab sticker sheet is inserted into the printer, a new print template, in which all tab stickers are still free and printable, has to be loaded in the control station, for example from the storage means.

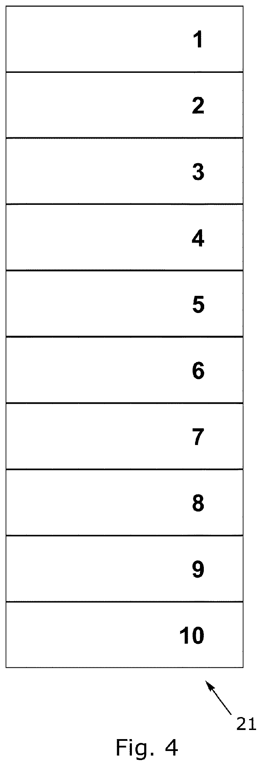

Figure 4 shows an affixing applicator 21 with which the tab stickers can easily and sustainably be affixed in a staggered and regular way on folders or on the edges of the pages or other sheet-like material of a document or of a book. The affixing applicator 21 is provided with a regular division comprising sections having the size of a tab sticker. The sections, which are numbered from 1 to 10 in Figure 4, indicate the position of the tab sticker, such that a regularly staggered row of index tabs can be applied on the pages of a document, etc. For this purpose, the affixing applicator is positioned next to the sheet that must be provided with an index tab.

## Claims

1. Method for sustainable printing of a tab sticker sheet (1), wherein the tab sticker sheet is provided with one or more free tab stickers (2, 2', 2", 3, 3', 3" 4, 4', 4"), which are suitable for printing by a printer,
wherein the printer is controlled by a control station with display means and input means, and wherein a print template (11) corresponding to and assigned to the tab sticker sheet to be printed is loaded in the control station and a representation of the print template is displayed on the display means,
**characterized, in that** the method comprises the steps:
selecting a free tab sticker (12", 13", 14") on the print template (11) of the control station using the input means,
entering a tab text (17, 18, 19) on a selected free tab sticker (12", 13", 14") of the print template,
feeding the entered tab text (17, 18, 19) including position information from the print template (11) to the printer such that the tab sticker (2", 3", 4") on the tab sticker sheet (1) is provided with the entered text (17, 18, 19) by means of printing, which tab sticker (2", 3", 4") on the tab sticker sheet (1) corresponds to the selected free tab sticker (12", 13", 14") on the print template (11),
selecting again the tab sticker (12", 13", 14") on the print template (11) by means of the input means, thereby erasing the entered tab text (17, 18, 19) on the print template (11), and designating this tab sticker (12", 13", 14") on the print template (11), corresponding to the tab sticker sheet (1), as used or non-free (15).

2. Method for sustainable printing of a tab sticker sheet according to claim 1, wherein the print-template is an editable document-file with a fixed layout in an open format, which preferably can be read, presented and/or processed by a standard plug-in and/or standard read-view-edit software program.

3. Method for sustainable printing of a tab sticker sheet according to claim 1 - 2, wherein the control station comprises storage means, and the method further comprises the step, after the step of selecting again the tab sticker (12", 13", 14"):
storing the print template (11) comprising at least one used tab sticker (12", 13", 14") onto the storage means, the print template corresponding to and assigned to the printed tab sticker sheet (1).

4. Method for sustainable printing of a tab sticker sheet (1) according to claim 3, the method further comprising the steps, before the step of selecting a free tab sticker (12", 13", 14") on the print template (11):
loading into the printer of a tab sticker sheet (1) with at least one free tab sticker (2, 2', 2" 3, 3', 3" 4, 4', 4");
loading into the control station from the storage means of the print template (11) with at least one free tab sticker, corresponding to and assigned to the tab sticker sheet (1) to be printed in the printer.

5. Method for sustainable printing of a tab sticker sheet (1) according to claim 4, wherein the step of loading from the storage means in the control station of the print template (11) with at least one free tab sticker is replaced by: loading a new print template (11) without used stickers, when a new tab sticker sheet (1) without any used tab stickers is inserted into the printer.

6. The use of a tab sticker (2, 2', 2", 3, 3', 3" 4, 4', 4"), which has been printed according to the method of one of the preceding claims.

7. The use of a tab sticker (2, 2', 2" 3, 3', 3" 4, 4', 4") according to claim 6, wherein two or more tab stickers are applied as index tabs on one or more sheets of paper or other materials, including pieces of cardboard and plastic, and wherein an affixing applicator (21) is used to apply the index tabs at a predetermined distance and number to the sheets of paper.
